# EUROPEAN PATENT APPLICATION

(11) **EP 4 644 268 A1**
(43) Date of publication of application: **05.11.2025**
(21) Application number: 22970095.0
(22) Date of filing: 27.12.2022
(51) Int. Cl.: B64U 10/70, B64U 70/99, B64U 80/86

(54) **UNMANNED AIRCRAFT**

(71) Applicant: Kubota Corporation, Osaka 556-8601 (JP)
(72) Inventor: SAKAGUCHI, Kazuo, Sakai-shi, Osaka 590-0908 (JP)
(74) Representative: Cabinet Beau de Loménie
(86) International application number: PCT/JP2022/048350
(87) International publication number: WO 2024/142306

(57) **Abstract**

It has been desired to be able to easily move an unmanned aerial vehicle to another place while it is on the ground, without flying the unmanned aerial vehicle to move it. An unmanned aerial vehicle includes: a main body 1; a plurality of arms 2 attached to the main body 1; rotary blades 3 attached to the respective arms 2 and configured to generate lift; and a travel device 9 capable of supporting the main body 1 and traveling to move while being on a ground.

## Description

### Technical Field

The present invention relates to an unmanned aerial vehicle, referred to as a drone or a multicopter, for example.

### Background Art

An unmanned aerial vehicle (UAV) includes a main body, a plurality of arms attached to the main body, and rotary blades (propellers) attached to the respective arms and configured to generate lift, and flies and moves in the air by using buoyancy generated by the rotor blades. Conventionally, when contacting the ground, the unmanned aerial vehicle is brought into contact with the ground in a position-fixed state using landing supports that extend downward from the main body (e.g., see Patent Document 1).

### Prior Art Documents

### Patent Documents

Patent Document 1: JP 2018-131169A

### Disclosure of the Invention

### Problem to be Solved by the Invention

In the above conventional configuration, the position of the unmanned aerial vehicle is fixed while it is on the ground. Thus, in order to move the unmanned aerial vehicle to another place, it is always necessary to fly the unmanned aerial vehicle to move it by driving the rotary blades. However, it is difficult to fly the unmanned aerial vehicle to move it, for example, when it is on the ground in a narrow building.

It has therefore been desired to be able to easily move an unmanned aerial vehicle to another place while it is on the ground, without flying the unmanned aerial vehicle to move.

### Means for Solving Problem

A characteristic configuration of an unmanned aerial vehicle according to the present invention lies in including: a main body; a plurality of arms attached to the main body; rotary blades attached to the respective arms and configured to generate lift; and a travel device capable of supporting the main body and traveling to move while being on a ground.

The unmanned aerial vehicle includes the travel device. The travel device supports the main body and is capable of traveling while it is on the ground. Accordingly, the unmanned aerial vehicle can easily travel to move without flying while it is on the ground.

In the present invention, it is preferable that the main body includes a landing support extending downward, and the travel device is attachable to and detachable from the landing support.

According to this configuration, when the travel device is attached to the landing support provided on the main body, the unmanned aerial vehicle can travel to move while being on the ground using the travel device. When the unmanned aerial vehicle performs a flight operation, the travel device can be removed from the landing support. Thus, the unmanned aerial vehicle is not subjected to the load of the travel device while performing the flight operation, so that the flight can be performed favorably with a low weight burden. Note that, when the unmanned aerial vehicle contacts the ground with the travel device not attached thereto, the unmanned aerial vehicle can contact the ground in a stable orientation by using the landing support.

Therefore, the unmanned aerial vehicle can easily travel to move while being on the ground, and it can also fly favorably during flight with a low weight burden. As a result, the unmanned aerial vehicle can be used in different ways depending on the usage situation, thereby improving convenience.

In the present invention, it is preferable that the landing support includes a protrusion extending downward, the travel device includes a receiver having a recessed shape into which the protrusion is insertable, and the travel device is configured to be attached to the landing support by inserting the protrusion into the receiver.

According to this configuration, the travel device can be attached with the protrusion provided on the landing support inserted into the recess provide in the travel device. That is, the travel device can be attached to the landing support while flying the unmanned aerial vehicle, with the travel device installed on the ground. Accordingly, the travel device can be easily attached by effectively utilizing the flight operation of the unmanned aerial vehicle.

In the present invention, it is preferable that the main body includes a landing support extending downward, and the travel device is fixed to the landing support.

According to this configuration, the unmanned aerial vehicle can easily travel to move while being on the ground, but troublesome work such as repeatedly removing and attaching the travel device is not required.

In the present invention, it is preferable that the travel device includes a drive unit for traveling.

According to this configuration, the travel device can travel to move with the driving force of the drive unit. This eliminates the need for a complex power transmission mechanism for transmitting, to the travel device, a driving force for flight, which is to be provided in an unmanned aerial vehicle. Accordingly, the unmanned aerial vehicle can easily travel to move while being on the ground without making a transmission structure of the entire unmanned aerial vehicle complex.

In the present invention, it is preferable that driving energy for the drive unit is supplied from the main body.

According to this configuration, the travel device does not need to include an energy source for drive, and the configuration can be simplified accordingly. The driving energy is, for example, driving electric power in an electrical driving configuration, or a mechanical driving force for driving a transmission shaft to rotate in a mechanical driving configuration.

### Brief Description of the Drawings

FIG. 1 is a side view of an unmanned aerial vehicle.
FIG. 2 is a plan view of the unmanned aerial vehicle.
FIG. 3 is a front view of a wheel support.
FIG. 4 is a plan view of the wheel support.
FIG. 5 is a block diagram showing a configuration of a main body.
FIG. 6 is a block diagram showing a configuration of a travel device.
FIG. 7 is a side view of the unmanned aerial vehicle in a flight state.
FIG. 8 is a diagram showing a landing support according to another embodiment.
FIG. 9 is a diagram showing a wheel support of another embodiment.

### Best Mode for Carrying out the Invention

Embodiments of the unmanned aerial vehicle according to the present invention will be described below with reference to the drawings.

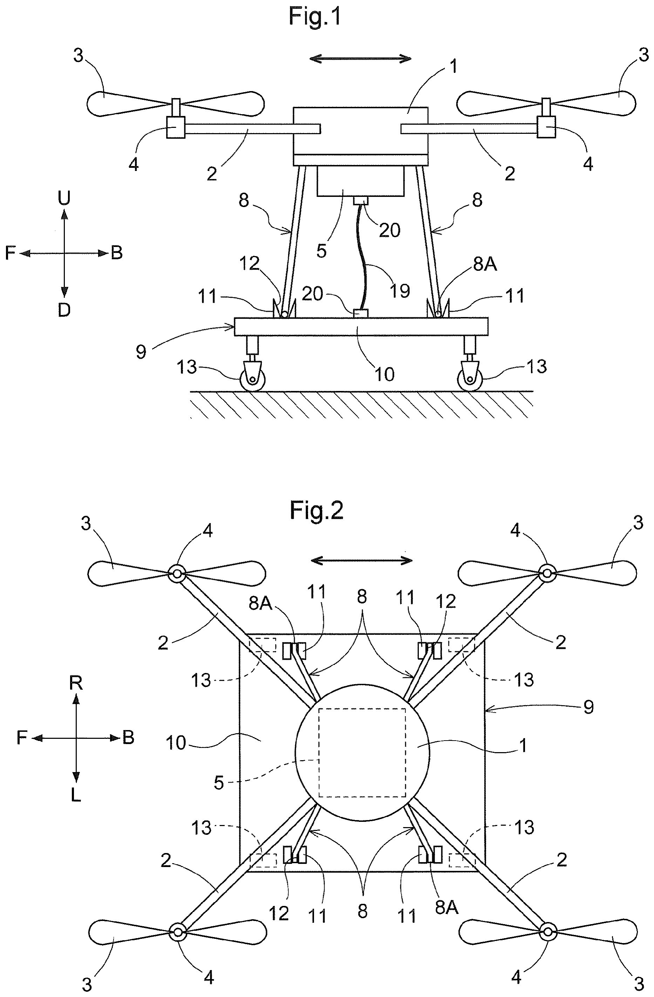

In the following description, "front" is defined as the direction of arrow F shown in FIG. 2, "rear" is defined as the direction of arrow B, "left" is defined as the direction of arrow L shown in FIGS. 1 and 2, and "right" is defined as the direction of arrow R, unless otherwise stated. Further, "up" is defined as the direction of arrow U shown in FIG. 1, and "down" is defined as the direction of arrow D.

FIGS. 1 and 2 show the unmanned aerial vehicle according to the present invention. The unmanned aerial vehicle is one that is commonly referred to as a drone and is capable of flying independently. The unmanned aerial vehicle has a main body 1, a plurality of arms 2 attached to the main body 1, and a plurality of propellers 3 attached to the respective arms 2 and serving as rotary blades for generating lift. The number of propellers 3 and arms 2 is not specifically limited. In the present embodiment, four propellers 3 and four arms 2 are provided. The four arms 2 extend from the main body 1 to the front left, front right, rear left, and rear right, respectively.

Each propeller 3 is driven by a driving force of electric motors for flight (hereinafter referred to as flight motors) 4. The unmanned aerial vehicle can fly by driving the propellers 3. That is, the unmanned aerial vehicle can move in the up-down direction, front-rear direction, and right-left direction while floating in the air by driving the propellers 3 with the flight motors 4. Also, the unmanned aerial vehicle can hover by driving the propellers 3.

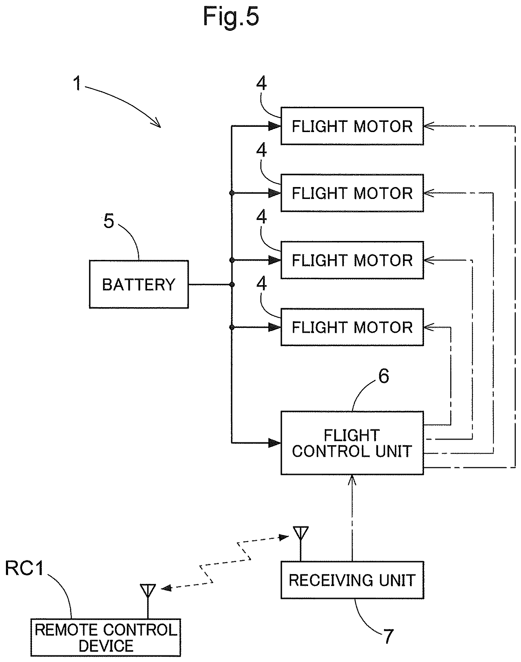

As shown in FIG. 5, the main body 1 includes a battery 5 for power supply and a flight control unit 6 that controls the operations of a plurality of flight motors 4. The electric power supplied from the battery 5 allows the flight control unit 6 to perform a control operation and the flight motors 4 to perform a drive operation.

That is, the flight control unit 6 controls the operations of the flight motors 4 with the electric power from the battery 5. Each flight motor 4 is driven by the electric power from the battery 5, and a running operation is performed based on a control command from the flight control unit 6. The flight control unit 6 controls the operations of the flight motors 4 based on a command from a remote control device RC1 on the main body side, which is operated by an operator. Command information from the remote control device RC1 is received by a receiving unit 7 and transmitted to the flight control unit 6.

The unmanned aerial vehicle may also be equipped with a work device (not shown) capable of performing predetermined work. For example, an unmanned aerial vehicle may include various work devices, such as a spraying device for applying a fertilizer or a chemical agent to crops planted in a field, a grass cutting device for performing grass cutting work, and a snow removal device for performing snow removal work.

As shown in FIGS. 1 and 2, the main body 1 includes a plurality of landing supports (legs) 8 extending downward. A plurality of (four in the example shown in FIG. 2) landing supports 8 are provided on the lower side of the main body 1, spaced apart from each other in the circumferential direction. Each landing support 8 has a rod shape extending downward and has a protrusion 8A protruding downward. When the unmanned aerial vehicle contacts the ground, the plurality of landing supports 8 come into contact with the ground, thereby allowing the unmanned aerial vehicle to maintain a stable orientation.

The unmanned aerial vehicle includes a travel device 9 capable of supporting the main body 1 and traveling to move while being on the ground. The travel device 9 is attachable to and detachable from the landing supports 8.

The travel device 9 includes a support base 10 having a rectangular shape in a plan view. Receivers 11 for supporting the landing supports 8 are provided on the upper surface of the support base 10 at positions corresponding to the respective landing supports 8 of the unmanned aerial vehicle. Each receiver 11 has a recess 12 into which the protrusion 8A of a corresponding landing support 8 can be inserted.

The travel device 9 is attached to the landing supports 8, i.e., the main body 1 of the unmanned aerial vehicle, by causing the unmanned aerial vehicle to fly to move to a position above the travel device 9 installed on the ground and then to land such that the plurality of landing supports 8 are inserted into the respective receivers 11. The travel device 9 in a state of being thus attached to the main body 1 allows the entire unmanned aerial vehicle to travel to move.

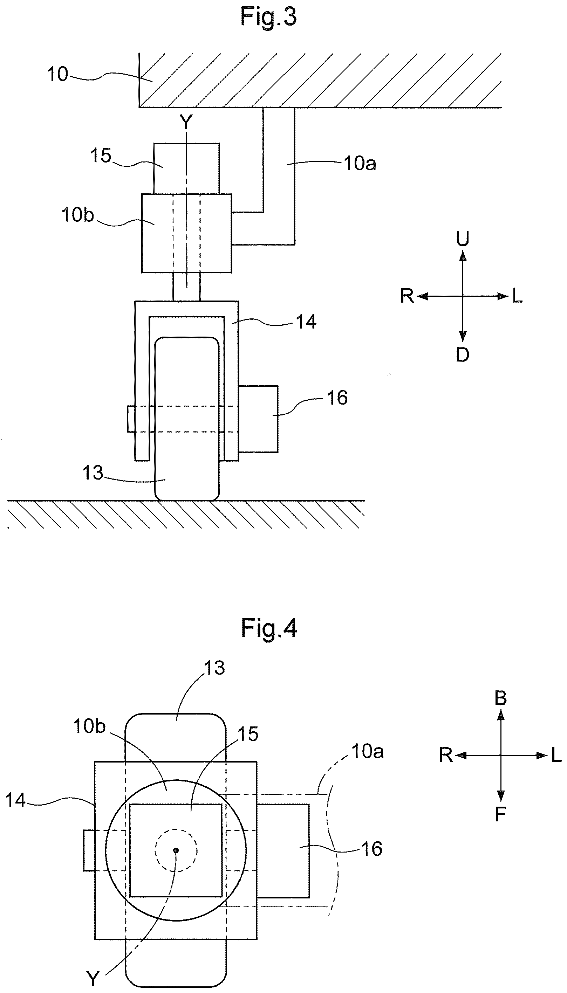

As shown in FIGS. 3 and 4, the travel device 9 includes a plurality of wheels 13 for traveling, a plurality of support brackets 14 enabling the support base 10 to support the wheels 13 such that each wheel 13 can be driven to rotate and steered about a vertical axis Y, a plurality of electric motors for steering (hereinafter referred to as steering motors) 15 capable of steering the wheels 13, and electric motors for traveling (hereinafter referred to as traveling motors) 16 serving as drive units capable of driving the wheels 13 to rotate.

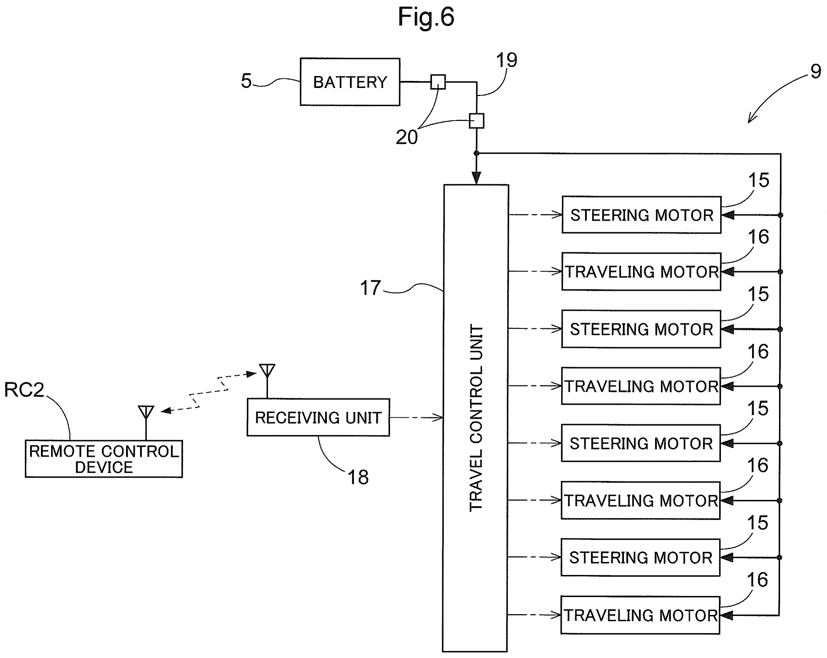

As shown in FIG. 6, a travel control unit 17 for controlling the operations of the steering motors 15 and the traveling motors 16 is provided. Although not shown, a steering angle sensor for detecting the steering angle of each wheel 13, a speed sensor for detecting the rotational speed of each wheel 13, and the like are also provided. Further, a receiving unit 18 is provided for receiving a command from an external remote control device RC2, and a command for a running operation of the travel device 9 is transmitted from external remote control device RC2 to the travel control unit 17 via the receiving unit 18.

Each steering motor 15 can change the direction of the corresponding wheel 13 by rotating the support bracket 14 about the vertical axis Y. The traveling motors 16 are provided respectively for the plurality of wheels 13, and enable the travel device 9 to travel to move by driving the wheels 13 to rotate.

The driving energy for the travel device 9 is supplied from the main body 1. That is, as shown in FIG. 6, the battery 5 included in the main body 1 supplies the driving power as the driving energy to the travel device 9 via a connection line 19. The connection line 19 is connected to the main body 1 and the travel device 9 via connectors 20 to and from which the connection line 19 can be connected and disconnected. Although not described in detail, the main body 1 is equipped with a power generation engine, which drives a power generation unit to generate power. The generated power is stored in the battery 5.

In the travel device 9, the electric power supplied from the main body 1 allows the travel control unit 17 to perform a control operation and allows the steering motors 15 and the traveling motors 16 to perform a drive operation. A running operation of the travel device 9 is performed based on the operation on the remote control device RC2. The travel device 9 can travel to move at a low speed by operating the plurality of traveling motors 16. Also, the travel device 9 can perform a turning operation to change the moving direction by operating the steering motors 15.

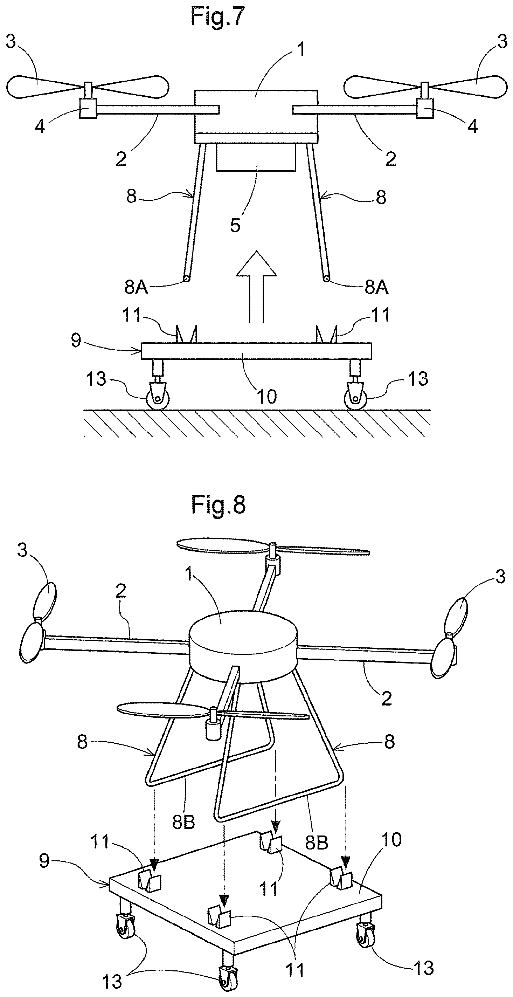

As shown in FIG. 7, when the unmanned aerial vehicle is caused to fly upward from a state of being attached to the travel device 9, the plurality of landing supports 8 are disengaged upward from the receivers 11. Thereafter, the unmanned aerial vehicle can perform predetermined work while continuing flight. When landing the unmanned aerial vehicle after the work is finished, the plurality of landing supports 8 are inserted into the corresponding receivers 11 while the unmanned aerial vehicle performs the flight operation, and then the unmanned aerial vehicle is landed. After landing, the unmanned aerial vehicle can move in a state of being on the ground using the travel device 9.

### Other Embodiments

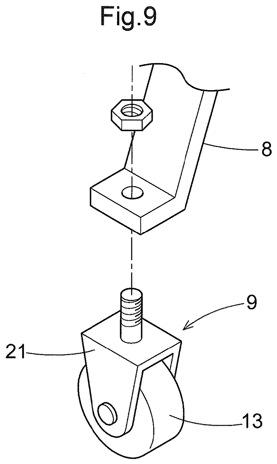

(1) In the above embodiment, the wheels 13 of the travel device 9 are always driven by the traveling motors 16. Alternatively, a configuration may be employed in which clutches (not shown) capable of intermittently transmitting motive power are provided between the traveling motors 16 and the wheels 13 such that the wheels 13 can be switched to a freely rotatable state by disconnecting the clutches. In this configuration, the travel device 9 can be manually moved by disconnecting the clutches for all the wheels 13.
(2) In the above embodiment, the wheels 13 of the travel device 9 are always driven by the steering motors 15. Alternatively, a configuration may be employed in which the steering motors 15 and the wheels 13 are configured such that motive power can be intermittently transmitted therebetween, and the wheels 13 can be switched to a freely turning state by interrupting the power transmission.
(3) In the above embodiment, the electric power serving as the driving energy for the motors (traveling motors 16 and steering motors 15) on the travel device 9 side is supplied from the battery 5 of the main body 1. Instead of this configuration, a dedicated battery may be provided on the travel device 9 side.
(4) In the above embodiment, only the traveling motor 16 acts on an axle of the wheel 13 of the travel device 9. In addition to this configuration, a brake mechanism (not shown) may be provided that prevents the rotation of the wheel 13 while the traveling motor 16 is not in operation.
(5) In the above embodiment, each landing support 8 is constituted by a rod-shaped member (leg) extending downward. Instead of this configuration, skids each having a grounding section 8B extending long in the front-rear direction may be used as the landing supports 8, as shown in FIG. 8.
(6) In the above embodiment, the travel device 9 is attachable to and detachable from the landing supports 8. Instead of this configuration, the travel device 9 may be fixedly supported by the landing supports 8. For example, the travel device 9 may be configured by providing, in a position-fixed state, brackets 21 each rotatably supporting the wheel 13 at a lower end of the landing support 8, as shown in FIG. 9. In this configuration, the traveling motors 16 and the steering motors 15 are not provided, and the unmanned aerial vehicle can be moved by manual operations. Further, if each bracket 21 is configured to be freely rotatable about a vertical axis, a turning operation can also be performed manually.
(7) In the above embodiment, the propellers 3 are driven by the flight motors 4. Instead of this configuration, the plurality of propellers 3 may be driven by motive power from the engine. In this case, the rotational speed of the propellers 3 can be changed by a continuously variable transmission.
(8) A configuration for canceling operating sound of the propellers 3 may be employed. For example, the plurality of propellers 3 may be operationally controlled to cancel the operation sound of each other.
(9) Each propeller 3 may be configured such that a rotary shaft of the propeller 3 is rotatable about an axis extending in the lateral direction of the vehicle body. That is, the propellers 3 may be of a so-called tilt type. This configuration enables the unmanned aerial vehicle to perform vertical takeoff and landing, hovering flight, and high-speed horizontal flight.

### Industrial Applicability

The present invention can be applied to an unmanned aerial vehicle, referred to as a drone or a multicopter, for example.

### Description of Reference Signs

- 1:: Main body
- 2:: Arm
- 3:: Propeller (rotary blade)
- 8:: Landing support
- 8A:: Protrusion
- 9:: Travel device
- 11:: Receiver
- 16:: Electric motor for traveling (drive unit)

## Claims

1. An unmanned aerial vehicle comprising:
a main body;
a plurality of arms attached to the main body;
rotary blades attached to the respective arms and configured to generate lift; and
a travel device capable of supporting the main body and traveling to move while being on a ground.

2. The unmanned aerial vehicle according to claim 1,
wherein the main body includes a landing support extending downward, and
the travel device is attachable to and detachable from the landing support.

3. The unmanned aerial vehicle according to claim 2,
wherein the landing support includes a protrusion extending downward,
the travel device includes a receiver having a recessed shape into which the protrusion is insertable, and
the travel device is configured to be attached to the landing support by inserting the protrusion into the receiver.

4. The unmanned aerial vehicle according to claim 1,
wherein the main body includes a landing support 8 extending downward, and
the travel device is fixed to the landing support 8.

5. The unmanned aerial vehicle according to any one of claims 1 to 4, wherein the travel device includes a drive unit for traveling.

6. The unmanned aerial vehicle according to claim 5, wherein driving energy for the drive unit is supplied from the main body.
